# EUROPEAN PATENT APPLICATION

(11) **EP 4 563 323 A1**
(43) Date of publication of application: **04.06.2025**
(21) Application number: 23846578.5
(22) Date of filing: 26.07.2023
(51) Int. Cl.: B29C 48/57, B29C 48/08, B29C 48/285, B29C 48/40, B65D 65/46, C08J 5/18

(54) **METHOD FOR MANUFACTURING WATER-SOLUBLE FILM, WATER-SOLUBLE FILM, PACKAGE, AND DRUG PACKAGING**

(30) Priority: 28.07.2022 JP 2022120785; 01.11.2022 JP 2022175342
(71) Applicant: Mitsubishi Chemical Corporation, Tokyo 100-8251 (JP)
(72) Inventor: MUTA Takatoshi, Tokyo 100-8251 (JP); UEDA Koudai, Tokyo 100-8251 (JP); SAKAI Norihito, Tokyo 100-8251 (JP)
(74) Representative: Hoffmann Eitle
(86) International application number: PCT/JP2023/027406
(87) International publication number: WO 2024/024848

(57) **Abstract**

A method for producing a water-soluble film by mixing and dissolving a water-soluble polymer in water using a multi-screw extruder is provided, in which the water-soluble film is free from undissolved residues and has excellent appearance. A resin composition (Z) is extruded from a die to form a film, the resin composition (Z) being obtained by mixing and dissolving a water-soluble polymer (A) in water using a multi-screw extruder. The multi-screw extruder includes a plurality of temperature-regulatable cylinders, and a plurality of screws each including a combination of a plurality of screw elements. Each of the screws has one or more kneading disk regions, and where the one or more kneading disk regions are denoted as K₁, K₂, K₃, ..., Kₘ from upstream of the multi-screw extruder, K₁ has an upstream end located within 50% from upstream with respect to a screw effective length (L) direction, and a ratio (L_{KD}/L) of a total length (L_{KD}) of the kneading disk regions to the screw effective length (L) is equal to or more than 0.2.

## Description

### TECHNICAL FIELD

The present disclosure relates to a method for producing a water-soluble film, in which a resin composition (Z) containing a mixture of a water-soluble polymer (A) and water as a main component is extruded from a die to form a film, the mixture being obtained by mixing and dissolving the water-soluble polymer (A) in water using a multi-screw extruder. The present disclosure also relates to a water-soluble film obtained using the method.

### BACKGROUND ART

Water-soluble films have been used in a wide variety of fields. In particular, water-soluble films made of polyvinyl alcohol resins are widely used in individual packages (unit packages) for chemical agents such as agricultural agents and detergents, and food packages.

There is a known method for producing a water-soluble film, in which a raw material composition including a water-soluble polymer such as polyvinyl alcohol resin is dissolved or dispersed in a solvent such as water, mixed, and defoamed to prepare a mixture (film-forming material), then the film-forming material is ejected from a die and casted onto a cast surface such as a metal surface of an endless belt or drum roll or a plastic substrate surface, and the casted material is dried.

As a method for mixing a water-soluble polymer with a solvent and dissolving or dispersing the water-soluble polymer, any of the following methods are used: a method in which the polymer is dissolved by stirring with a stirring blade while being heated in a container such as a tank; a method in which the polymer is mixed and dissolved using a screw while being heated in an extruder; and the like.

As a method for producing a water-soluble film by mixing and dissolving a water-soluble polymer in a solvent in an extruder, for example, the following methods are known: a production method including steps of feeding a powdery polyvinyl alcohol resin to a twin-screw extruder and feeding a solvent for liquidizing the polyvinyl alcohol resin (see PTL 1); and a production method characterized in that a multi-screw extruder with no vent section is used, temperatures of a head, a die outlet, and a boiling point of liquid are controlled, and a back pressure in the die is regulated in a predetermined range (see PTL 2).

### RELATED ART DOCUMENT

### PATENT DOCUMENT

PTL 1: JP-A-2002-254492
PTL 2: JP-A-2015-182372

### SUMMARY

### PROBLEMS TO BE SOLVED BY THE DISCLOSURE

The water-soluble films for use in chemical agent packaging applications are particularly required to satisfy excellent cold water solubility, storage stability against various chemical agents, and other various physical properties, and are diverse in water-soluble polymers as main components and in kinds of additives. However, in the conventionally known production methods such as PTL 1 and PTL 2, undissolved residues of the water-soluble polymer remain in the resin composition (film-forming material) to impair the appearance of the resultant water-soluble film. Therefore, there is a need for further improvement.

In such a situation, the present disclosure provides a method for producing a water-soluble film by mixing and dissolving a water-soluble polymer in water using a multi-screw extruder, in which the water-soluble film is free from undissolved residues of the water-soluble polymer and has excellent appearance.

### MEANS FOR SOLVING THE PROBLEMS

The inventors of the present disclosure have conducted elaborate studies in view of such a circumstance and has found that the above problem can be solved by disposing a first kneading disk region in a particular range in a screw configuration of a multi-screw extruder, and setting the ratio of kneading disk regions to the screw effective length to a particular range in production of a water-soluble film.

Specifically, the present disclosure has the following aspects.
[1] A method for producing a water-soluble film, in which a resin composition (Z) is extruded from a die to form a film, the resin composition (Z) being obtained by mixing and dissolving a water-soluble polymer (A) in water using a multi-screw extruder, wherein
   the multi-screw extruder includes a plurality of temperature-regulatable cylinders, and a plurality of screws each including a combination of a plurality of screw elements, and
   each of the screws has kneading disk regions, where the kneading disk regions are denoted as K₁, K₂, K₃, ..., Kₘ (where m is an integer equal or more than 1, and Kₘ is a kneading disk region located most downstream) from upstream of the multi-screw extruder, K₁ has an upstream end located within 50% from upstream with respect to a screw effective length (L) direction, and a ratio (L_{KD}/L) of a total length (L_{KD}) of the kneading disk regions to the screw effective length (L) is equal to or more than 0.2.
[2] The method for producing a water-soluble film according to [1], wherein the kneading disk region Kₘ has a downstream end located 50% or more from upstream with respect to the screw effective length (L) direction.
[3] The method for producing a water-soluble film according to [1] or [2], wherein the water-soluble polymer (A) includes a polyvinyl alcohol resin.
[4] The method for producing a water-soluble film according to any one of [1] to [3], wherein the resin composition (Z) extruded from the die has a water content of 20 to 60% by mass.
[5] The method for producing a water-soluble film according to any one of [1] to [4], wherein the resin composition (Z) includes a plasticizer (B) in a proportion of 10 to 60 parts by mass per 100 parts by mass of the water-soluble polymer (A).
[6] A water-soluble film produced by the method for producing a water-soluble film according to any one of [1] to [5].
[7] A package formed from the water-soluble film according to [6].
[8] A chemical agent package including: a package bag formed from the water-soluble film according to [6]; and a chemical agent packaged in the package bag.

### EFFECTS OF THE DISCLOSURE

The method for producing a water-soluble film according to the present disclosure can produce a water-soluble film free from undissolved residues of the water-soluble polymer and having excellent appearance. The resulting water-soluble film is not broken or does not leak the contents when used for packaging applications for chemical agents and the like.

### BRIEF DESCRIPTION OF DRAWINGS

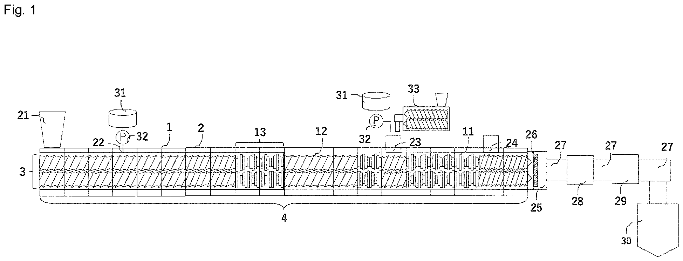

FIG. 1 is an illustration of a multi-screw extruder for use in an embodiment of the present disclosure.

### EMBODIMENTS OF THE DISCLOSURE

The present disclosure will be described more specifically below based on exemplary embodiments of the present disclosure. However, it should be understood that the present disclosure is not limited to these embodiments.

In the present disclosure, the expression "X to Y" (X and Y are each a given number) is intended to encompass "preferably more than X" or "preferably less than Y" unless otherwise specified, in addition to the meaning of "equal to or more than X and equal to or less than Y".

The expression "equal to or more than X" (X is a given number) or "equal to or less than Y" (Y is a given number) is intended to encompass "preferably greater than X" or "preferably less than Y".

In the present disclosure, the expression "x and/or y" (x and y are each a given configuration or component) is intended to mean the following three meanings: only x; only y; and x and y.

A main component refers to a component having a largest proportion in a target, and typically, equal to or more than 50% by mass in the target, preferably equal to or more than 60% by mass, particularly preferably equal to or more than 70% by mass.

The present disclosure provides a method for producing a water-soluble film, in which a resin composition (Z) containing a mixture of a water-soluble polymer (A) and water as a main component is extruded from a die to form a film, the mixture being obtained by mixing and dissolving the water-soluble polymer (A) in water using a multi-screw extruder.

### <Multi-Screw Extruder>

An example of a multi-screw extruder used in the present disclosure is illustrated in FIG. 1.

In FIG. 1, a multi-screw extruder 1 includes a plurality of screws 3 inside a cylinder 4 having a plurality of temperature-regulatable cylinders 2 joined to each other.

The multi-screw extruder 1 has a head 25 on its downstream side. A breaker plate 26 can be installed in a channel of the head 25. The breaker plate 26 can have a mesh for catching foreign matter.

Downstream of the head 25, a conduit 27, a gear pump 28, a filtering device 29 such as filter pack and screen changer, and the like can be connected as needed. A die 30 is installed most downstream. As used herein "downstream" refers to a direction in which a composition flows in the multi-screw extruder 1, and "upstream" refers to the opposite direction.

In the present disclosure, a twin-screw extruder as well as an extruder with three or more screws can be used as the multi-screw extruder 1. However, a twin-screw extruder is preferred in terms of facility initial cost and maintenance.

A configuration of the multi-screw extruder 1 will now be described.

### [Screw]

Each of the screws 3 is a combination of screw elements divided in a screw effective length direction. The size of the screw 3 can be expressed by a screw effective length (L) (in mm) and a screw diameter (D) (in mm).

In the present disclosure, a ratio (L/D) between the screw effective length (L) (in mm) and the screw diameter (D) (in mm) is preferably 40 to 100, more preferably 45 to 95, even more preferably 50 to 90, particularly preferably 52 to 85.

If the ratio (L/D) is too small, the mixing may be insufficient to produce undissolved residues of the water-soluble polymer (A), or vapor in the extruder may flow back. On the other hand, if the ratio (L/D) is too large, the resin composition (Z) which is a mixture (film-forming material) may suffer coloring, or the resulting film may be reduced in antiblocking properties.

The screw elements include, for example, a kneading disk element 11 and a full-flight element 12.

The kneading disk element 11 is a screw element having the ability to knead and mix a raw material in the extruder. Examples of the kneading disk element 11 include kneading disk, rotor, twist kneading disk, and gear kneading.

In the kneading disk, a plurality of plate-shaped kneading disks are continuously aligned in the axial direction. The plate-shaped kneading disks each have an approximately oval shape in cross section perpendicular to the axial direction of the screw. In the kneading disk, as the screw rotates, the kneading disk rotates, and a material is guided in between the kneading disk and an inner wall of the cylinder and kneaded.

The kneading intensity of the kneading disk can be adjusted by the way the kneading disk is attached (attachment angle relative to the screw axis).

For example, in the present disclosure, a forward kneading disk can be used, in which a plurality of kneading disks are continuously attached with a phase difference at a predetermined pitch of 30 to 60° in a reverse rotation direction of the screw.

A neutral kneading disk may also be used, in which kneading disks are continuously attached with a phase difference at a pitch of 90°.

A backward kneading disk may also be used, in which a plurality of kneading disks are continuously attached with a phase difference at a predetermined pitch of 30 to 60° in a rotation direction of the screw.

The forward kneading disk has the ability to feed a material downstream because the kneading disks are aligned in a twisted arrangement in the axial direction, whereas the neutral kneading disk has almost no ability to feed a material. The neutral kneading disk therefore allows the material to stay in the kneading section thereby facilitating sufficient kneading, and can increase the degree of kneading, compared with the forward kneading disk. The backward kneading disk can further increase the degree of kneading because it has the ability to feed back the kneaded resin composition (Z) from downstream to upstream.

The full-flight element 12 is a screw element having a spiral groove, in which a flight that forms the groove is spiral.

As the full-flight element 12 rotates, the composition in the groove of the full-flight element 12 is transported to another flight groove at a meshing section and pushed downstream.

The number of flights (number of threads) of the full-flight element 12 may be one, two, or three or more, but preferably two in terms of efficient transferability. The full-flight element 12 may have any length and any flight pitch, but the full-flight element 12 located near a kneading disk region (described later) preferably has a shorter pitch in order to increase the filling rate.

In the present disclosure, the screw 3 preferably has a kneading disk region 13 where the kneading disk elements 11 are continuous. Because of the provision of the kneading disk region 13, the water-soluble polymer (A) can be more efficiently mixed and dissolved in water.

The screw 3 may have one or more kneading disk regions 13 but preferably has a plurality of kneading disk regions 13.

A plurality of kneading disk regions 13 can be disposed such as K₁, K₂, K₃, ..., Kₘ (Kₘ is the most downstream kneading disk region) from upstream of the multi-screw extruder 1. The full-flight element 12 is disposed between the kneading disk regions 13.

The provision of the full-flight element 12 (full-flight region) between the kneading disk regions 13 achieves the compatibility between downstream transferability and dissolving and kneading properties, thereby reducing undissolved residues and improving productivity.

In the present disclosure, it is important that the kneading disk region K₁ has an upstream end located within 50% from upstream with respect to the screw effective length (L) direction. More preferably, the upstream end is located within 40%, particularly preferably within 35%.

When the upstream end of the kneading disk region K₁ is located within the above range from upstream with respect to the screw effective length (L) direction, strong shear and kneading can be imparted to the system in the multi-screw extruder in the early stage to enable efficient mixing and dissolution of the water-soluble polymer (A), so that undissolved residues are reduced, resulting in a transparent water-soluble film.

As used herein "the upstream end of the kneading disk region K₁" is the location of the upstream end of the kneading disk element disposed most upstream among the kneading disk elements 11 that constitute the kneading disk region K₁.

"Located X% from upstream with respect to the screw effective length (L) direction" refers to a relative position where, among all the screw elements that constitute the screw 3, the upstream end of the screw element disposed most upstream is 0%, and the downstream end of the screw element disposed most downstream is 100%.

In the present disclosure, the kneading disk region Kₘ preferably has a downstream end located 50% or more from upstream with respect to the screw effective length (L) direction, more preferably 55% or more, particularly preferably 60% or more.

When the downstream end of the kneading disk region Kₘ is located within the above range from upstream with respect to the screw effective length (L) direction, strong shear and kneading can be imparted to small undissolved residues left in the end stage in the system in the multi-screw extruder to enable efficient mixing and dissolution of the water-soluble polymer (A), so that undissolved residues tend to be reduced, resulting in a transparent water-soluble film.

As used herein "the downstream end of the kneading disk region Kₘ" is the location of the downstream end of the kneading disk element disposed most downstream among the kneading disk elements that constitute the kneading disk region Kₘ.

In the present disclosure, the ratio (L_{KD}/L) of the total length (L_{KD}) of the kneading disk regions 13 to the screw effective length (L) is equal to or more than 0.2. The ratio (L_{KD}/L) is preferably equal to or more than 0.25, even more preferably equal to or more than 0.4, particularly preferably equal to or more than 0.45, especially preferably equal to or more than 0.5. The ratio (L_{KD}/L) is preferably equal to or less than 0.95, more preferably equal to or less than 0.90, even more preferably equal to or less than 0.85.

The "total length (L_{KD}) of the kneading disk regions 13 is the sum of axial lengths of K₁, K₂, K₃, ..., Kₘ described above. The ratio (L_{KD}/L) within the above range ensures time for imparting strong shear and kneading in the multi-screw extruder and enables efficient mixing and dissolution of the water-soluble polymer (A), thereby reducing undissolved residues and reducing the size of undissolved residues.

If the ratio (L_{KD}/L) of the total length (L_{KD}) of the kneading disk regions to the screw effective length (L) is too small, mixing and dissolution is insufficient, so that undissolved residues of the water-soluble polymer are produced or the film-forming material which is a mixture tends to be reduced in uniformity and dispersibility. On the other hand, if the ratio (L_{KD}/L) of the total length (L_{KD}) of the kneading disk regions to the screw effective length (L) is too large, the film-forming material which is a mixture tends to be colored, or the antiblocking properties of the resultant film tends to be reduced.

The kneading disk region 13 preferably has a certain amount of length. Specifically, the axial length of the kneading disk region 13 is preferably equal to or more than 2% of the screw effective length (L), more preferably equal to or more than 3%, even more preferably equal to or more than 4%. The axial length of the kneading disk region 13 is preferably equal to or less than 90%, more preferably equal to or less than 80%, even more preferably equal to or less than 70%. When a plurality of kneading disk regions 13 are present, each kneading disk region 13 preferably has the axial length in the above range.

When the axial length of the kneading disk region 13 is equal to or more than 2%, the resin composition is more likely to stay in the kneading section, and the water-soluble polymer (A) tends to be easily dissolved. When the axial length of the kneading disk region 13 is equal to or less than 90%, the resin composition (Z) tends to be easily transferred downstream.

In the present disclosure, the configuration of the kneading disk region 13 as described above tends to achieve the compatibility between downstream transferability and dissolution and kneading properties.

The kneading disk region 13 allows the resin composition (Z) to stay for a longer time than the full-flight region and therefore allows dissolution and kneading to proceed more. However, if the screw 3 has only the kneading disk region 13 or the kneading disk region 13 is too long, the resin composition (Z) is less transferred downstream. It is therefore preferable that the kneading disk region 13 has a certain amount of constituent length in terms of dissolution and kneading efficiency, and it is preferable that the full-flight region is provided as appropriate between the kneading disk regions 13 in terms of downstream transferability.

### [Cylinder]

The cylinder 4 includes a plurality of temperature-regulatable cylinders 2 joined to each other as described above and has at least two raw material feed ports, namely, a raw material feed port for feeding a raw material containing the water-soluble polymer (A) as a main component and a raw material feed port for feeding a raw material including water.

In the present disclosure, it is also preferable that the cylinder 4 has a plurality of raw material feed ports for feeding a raw material including water. When the cylinder 4 has a plurality of raw material feed ports for feeding a raw material including water, the water content of the resin composition (Z) extruded from the die can be adjusted. Further, after the water-soluble polymer (A) is mixed with and dissolved in water, a variety of additives described later, such as plasticizer (B), filler (C), and surfactant (D), dissolved in water, can be fed to the multi-screw extruder, whereby thermal hysteresis and shear can be reduced. This configuration is effective when an additive relatively weak against heat and shear and easily decomposed or dissolved is added.

The cylinder 4 has a raw material feed port 21 on its upstream side. A plurality of raw material feed ports, such as a raw material feed port 22 and a raw material feed port 23, can be installed in the cylinder 4 downstream of the raw material feed port 21.

The raw material feed port 22 allows a liquid to be fed from a liquid feed pump 32 connected to a liquid tank 31. The raw material feed port 23 allows a liquid to be fed from a liquid feed pump 32 connected to a liquid tank 31 or allows a solid to be fed into the multi-screw extruder 1 using a feeder 33 (including a side feeder).

Either the kneading disk element 11 or the full-flight element 12 can be used as the screw element in the cylinder 2 having a raw material feed port for feeding a raw material including water, but the full-flight element 12 is preferably used in order to suppress a water overflow at a water supply section or an upstream back-flow.

It is preferable that the full-flight element 12 is disposed between the raw material feed port for feeding a raw material containing the water-soluble polymer (A) as a main component and the raw material feed port disposed most upstream among the raw material feed ports for feeding a raw material including water.

As described above, the cylinder 4 includes the temperature-regulatable cylinders 2 joined to each other. Where the temperature-regulatable cylinders 2 are denoted as C₁, C₂, C₃ ... from upstream, a cylinder 2 having a raw material feed port for feeding a raw material containing the water-soluble polymer (A) as a main component is denoted as C_{S}, and a cylinder having a raw material feed port most upstream among raw material feed ports for feeding a raw material including water is denoted as C_{T}, preferably, 0≤T-S≤6 is satisfied (where T≥S, S and T are each an integer equal to or more than 1), more preferably 1≤T-S≤5, particularly preferably 1≤T-S≤4 is satisfied.

If T-S≥7, the water-soluble polymer (A) undergoes more thermal hysteresis, and the resulting resin composition (Z) tends to be colored in yellow.

Moreover, the water-soluble polymer (A) is transferred in a longer region in the cylinder 4 without being plasticized by water. This increases the load and/or shearing heat of the multi-screw extruder 1, so that the likelihood of a stop of the multi-screw extruder 1 is increased, and the coloring of the resin composition (Z) tends to be accelerated.

When there are a plurality of raw material feed ports for feeding a raw material containing the water-soluble polymer (A) as a main component, it is preferable that the positional relation between the cylinder 2 having the most upstream raw material feed port and the cylinder 2 having the most upstream raw material feed port among the raw material feed ports for feeding a raw material including water is in the above range.

In the present disclosure, the raw material feed port for feeding a raw material containing the water-soluble polymer (A) as a main component is preferably the raw material feed port 21, and the raw material feed port for feeding a raw material including water is preferably the raw material feed ports 22, 23. The raw material feed port 21 is preferably installed at the cylinder C₁.

The cylinder 2 may have a vent hole 24. In the present disclosure, the cylinder 2 preferably has the vent hole 24 in order to defoam a volatile component such as water or gas produced in the extruder. The vent hole 24 can remove vapor produced in the cylinder 4 or can be connected to a vacuum pump to create a vacuum.

The numbers of raw material feed ports and vent holes may be larger than those illustrated in FIG. 1, if necessary.

### <Resin Composition (Z)>

As described above, the present disclosure provides a method for producing a water-soluble film, in which a resin composition (Z) containing a mixture of a water-soluble polymer (A) and water as a main component is extruded from a die to form a film, the mixture being obtained by mixing and dissolving the water-soluble polymer (A) in water using a multi-screw extruder. Each of the components of the resin composition (Z) will now be described.

### [Water-Soluble Polymer (A)]

Examples of the water-soluble polymer (A) include polyvinyl alcohol resins, polyethylene glycol resins, carboxymethyl cellulose resins, sodium acrylate resins, polyvinyl pyrrolidone, dextrin, chitosan, chitin, methyl cellulose, hydroxyethyl cellulose, casein, and pullulan. The water-soluble polymers may be used alone or may be used in combination of two or more.

Among those, polyvinyl alcohol resins are preferred.

### [Polyvinyl Alcohol Resin]

In the present disclosure, the polyvinyl alcohol (hereinafter abbreviated as "PVA") resins are a resin including a vinyl alcohol unit as a main unit component in repeating units of the polymer. The main unit component refers to a unit component that accounts for equal to or more than 50 mol% and equal to or less than 100 mol% of the resin. The PVA resins are thermoplastic resins and yet water soluble. Films made of PVA resins as main components are used as water-soluble films and widely used in various fields.

Examples of the PVA resin used in the present disclosure include unmodified PVA and modified PVA resin.

The PVA resin used in the present disclosure preferably has an average saponification degree equal to or more than 80 mol%, particularly preferably 82 to 99.9 mol%, even more preferably 85 to 98.5 mol%, especially preferably 90 to 97 mol%. When the unmodified PVA is used as the PVA resin, its average saponification degree is preferably equal to or more than 80 mol%, particularly preferably 82 to 99 mol%, even more preferably 85 to 90 mol%. When the modified PVA resin is used as the PVA resin, its average saponification degree is preferably equal to or more than 80 mol%, particularly preferably 85 to 99.9 mol%, even more preferably 90 to 98 mol%. Further, when an anionic group-modified PVA resin is used as the PVA resin, its average saponification degree is preferably equal to or more than 85 mol%, particularly preferably 88 to 99 mol%, even more preferably 90 to 97 mol%, especially preferably 91 to 94 mol%. If the average saponification degree is too small, the solubility of the water-soluble film in water tends to be reduced over time, depending on the pH of the chemical agent to be packaged. If the average saponification degree is too large, the solubility in water tends to be significantly reduced.

The polymerization degree of the PVA resin used in the present disclosure can be expressed usually by an aqueous solution viscosity. The PVA resin preferably has a 4 mass% aqueous solution viscosity of 5 to 50 mPa·s as measured at 20°C, even more preferably 13 to 45 mPa·s, particularly preferably 17 to 40 mPa·s. When the unmodified PVA is used as the PVA resin, the unmodified PVA preferably has a 4 mass% aqueous solution viscosity of 5 to 50 mPa·s as measured at 20°C, even more preferably 13 to 45 mPa·s, particularly preferably 17 to 40 mPa·s. When the modified PVA resin is used as the PVA resin, the modified PVA resin preferably has a 4 mass% aqueous solution viscosity of 5 to 50 mPa·s as measured at 20°C, even more preferably 13 to 40 mPa·s, particularly preferably 17 to 30 mPa·s. If the viscosity is too small, the mechanical strength of the water-soluble film as a packaging material tends to be reduced. On the other hand, if too large, the productivity tends to be reduced due to high viscosity of the film-forming material.

The average saponification degree is measured in conformity with JIS K 6726 3.5, and the 4 mass% aqueous solution viscosity is measured in conformity with JIS K 6726 3.11.2.

When the modified PVA resin is used as the PVA resin, its modification degree is preferably 1 to 10 mol%, even more preferably 1.5 to 8 mol%, particularly preferably 2 to 6 mol%, especially preferably 2 to 5 mol%. If the modification degree is too small, the solubility in water tends to be reduced, and if too large, the productivity of the PVA resin is reduced, or the biodegradability tends to be reduced, and blocking tends to occur.

In the present disclosure, the PVA resins each may be used alone, the unmodified PVA and the modified PVA resin may be used in combination, or two or more PVA resins different in saponification degree, viscosity, modifying group, modification degree, and the like may be used in combination.

In particular, in the water-soluble film for chemical agent packaging (particularly for laundry detergent packaging), the PVA resin preferably contains the modified PVA resin in terms of solubility, in particular, preferably contains the anionic group-modified PVA resin. Examples of the anionic group include carboxy group, sulfonic acid group, and phosphoric acid group. In terms of solubility in water and resistance against chemical agents, carboxy group and sulfonic acid group are particularly preferred, and carboxy group is even more preferred.

The carboxy group of the carboxy group-modified PVA is derived from a monomer having a carboxy group. Examples include carboxy group-containing unsaturated compounds such as acrylic acid, methacrylic acid, crotonic acid, maleic acid, maleic anhydride, fumaric acid, and itaconic acid, compounds in which these carboxy groups are entirely or partially neutralized by bases such as alkali compounds (e.g., sodium hydroxide, potassium hydroxide, etc.), or monoalkyl esters of the carboxy group-containing unsaturated compounds such as methyl acrylate, ethyl acrylate, methyl methacrylate, monomethyl fumarate, and monomethyl maleate, and dialkyl esters of the carboxy group-containing unsaturated compounds such as diethyl fumarate and diethyl maleate. These esters typically have a carbon atom number of 1 to 20 in terms of cost efficiency and practicality, preferably a carbon atom number of 1 to 10, particularly preferably a carbon atom number of 1 to 4. Among these, maleic acid compounds are preferred, and monomethyl maleate is even more preferred.

The PVA resin can be produced by a conventionally known method described, for example, in JP-A-2017-95679.

### [Water]

The water used in the present disclosure is preferably, but not limited to, ion-exchanged water and/or RO water.

The water preferably has a silica content equal to or less than 50 µg/L, preferably equal to or less than 5.0 µg/L, and has a chloride ion content equal to or less than 2 µg/L, preferably equal to or less than 1 µg/L.

In the present disclosure, the resin composition (Z) may contain a plasticizer (B), a filler (C), a surfactant (D), and other additives.

### [Plasticizer (B)]

In the present disclosure, it is preferable that the resin composition (Z) contains the plasticizer (B) in order to impart appropriate flexibility to the film. The plasticizers (B) may be used alone or in combination of two or more. It is also preferable that two or more plasticizers are used in combination in terms of mechanical properties and formability of the film.

Examples of the plasticizer (B) include glycerol such as glycerin, diglycerin, and triglycerin, alkylene glycols such as diethylene glycol, triethylene glycol, polyethylene glycol, propylene glycol, polypropylene glycol, and dipropylene glycol, trimethylolpropane, and sugar alcohols such as sorbitol, xylitol, and maltitol. Among these, glycerin, diglycerin, and polyethylene glycol are preferred in terms of easy availability and obtaining a plasticizing effect with a small amount, and sorbitol is preferred in terms of long-term stability of the package. These can be used alone or in combination of two or more.

When two or more plasticizers are used in combination, it is preferable to use a polyhydric alcohol (b1) (which hereinafter may be briefly referred to as "plasticizer (b1)") having a melting point equal to or higher than 80°C and a polyhydric alcohol (b2) (which hereinafter may be briefly referred to as "plasticizer (b2)") having a melting point equal to or lower than 50°C, in combination. The plasticizer (b2) is preferably a compound that is liquid around room temperature, in terms of productivity and mechanical properties of the resulting film, preferably a compound having a melting point equal to or lower than 30°C, in particular equal to or lower than 20°C. The lower limit of the melting point is typically -95°C, preferably -40°C, particularly preferably -15°C, even more preferably -5°C.

The proportion of the plasticizer (B) is preferably 10 to 60 parts by mass per 100 parts by mass of the water-soluble polymer (A), particularly preferably 15 to 55 parts by mass, even more preferably 20 to 50 parts by mass. If the proportion of the plasticizer (B) is too low, the plasticizing effect is low and the processability is reduced, or the toughness of the water-soluble film formed into a package tends to be reduced over time. If too high, the film strength tends to be reduced or blocking tends to occur.

### [Filler (C)]

In the present disclosure, the resin composition (Z) may further contain the filler (C), if necessary.

The filler (C) is contained to impart antiblocking properties. Examples of the filler (C) include an organic filler (c1) and an inorganic filler (c2). Among those, the organic filler (c1) is preferred. The fillers (C) may be used alone or in combination of two or more.

The filler (C) preferably has an average particle diameter of 0.1 to 50 µm, particularly preferably 1 to 35 µm. The average particle diameter of the filler (C) is calculated based on a D50 value of cumulative volume distribution (particle diameter of cumulative 50% of particles) measured by a laser diffraction-type particle size distribution measuring device.

The organic filler (c1) refers to a particulate substance (primary particles) of an organic compound in any form such as needle form, bar form, lamellar form, scale form, and spherical form, or an agglomerate (secondary particles) of the particulate substance.

The organic filler (c1) is mainly selected from polymer compounds. Examples include melamine resins, polymethyl (meth)acrylate resins, polystyrene resins, starches, polylactic acids, and other biodegradable resins. Among these, polymethyl (meth)acrylate resins, polystyrene resins, and biodegradable resins such as starches are preferred. In particular, starches are preferred in terms of dispersibility in the water-soluble polymer (A).

Examples of the starches include raw starches (corn starch, potato starch, sweet potato starch, wheat starch, cassava starch, sago starch, tapioca starch, sorghum starch, rice starch, pea starch, kudzu starch, bracken starch, lotus starch, water chestnut starch, etc.), physically modified starches (α-starch, fractionated amylose, moist heat-treated starch, etc.), enzyme-modified starches (hydrolyzed dextrin, enzyme-decomposed dextrin, amylose, etc.), chemically degraded starches (acid-treated starch, hypochlorous acid-oxidized starch, dialdehyde starch, etc.), and chemically modified starch derivatives (esterified starch, etherified starch, cationized starch, crosslinked starch, etc.). Among these, the raw starches, particularly corn starch and rice starch, are preferably used in terms of biodegradability, easy availability, and cost efficiency.

The organic filler (c1) preferably has an average particle diameter of 5 to 50 µm, particularly preferably 10 to 40 µm, even more preferably 15 to 35 µm. If the average particle diameter is too small, the film is more susceptible to blocking. If too large, the particles of the filler are likely to agglomerate, resulting in poor dispersibility, or the film tends to suffer pinholes when stretched during film processing.

As the inorganic filler (c2), inorganic oxide compounds and talc are preferred. In particular, titanium oxide, talc, and silica are preferred, and silica is even more preferred.

The inorganic filler (c2) preferably has an average particle diameter of 1 to 20 µm, particularly preferably 2 to 15 µm, even more preferably 3 to 10 µm. If the average particle diameter is too small, the flexibility and/or toughness of the film tends to be reduced or the film tends to be more susceptible to blocking. If too large, the film tends to suffer pinholes when stretched during film processing.

The proportion of the filler (C) is preferably 1 to 30 parts by mass per 100 parts by mass of the water-soluble polymer (A), particularly preferably 1.5 to 25 parts by mass, even more preferably 2 to 20 parts by mass. If the proportion of the filler (C) is too low, the film tends to be more susceptible to blocking. If too high, the flexibility and/or toughness of the film tends to be reduced.

### [Surfactant (D)]

In the present disclosure, the resin composition (Z) may further contain the surfactant (D), if necessary.

The surfactant (D) used in the present disclosure is contained in order to improve the peelability from a cast surface during film production. Typical examples include nonionic surfactants, cationic surfactants, and anionic surfactants. Examples of the surfactant (D) include polyoxyethylene nonyl phenyl ether, polyoxyethylene octyl nonyl ether, polyoxyethylene dodecyl phenyl ether, polyoxyethylene alkyl allyl ether, polyoxyethylene sorbitan monolaurate, polyoxyethylene sorbitan monopalmitate, polyoxyethylene sorbitan monostearate, polyoxyethylene sorbitan monooleate, polyoxyalkylene alkyl ether phosphate monoethanolamine salts, polyoxyethylene alkylamino ethers such as polyoxyethylene laurylamino ether and polyoxyethylene stearylamino ether, sorbitan monopalmitate, sorbitan monostearate, glycerol stearate, sucrose fatty acid esters. These can be used alone or in combination of two or more. Among these, polyoxyalkylene alkyl ether phosphate monoethanolamine salts and polyoxyethylene laurylamino ether are preferred in terms of production stability.

The surfactants (D) may be used alone or in combination of two or more.

The proportion of the surfactant (D) is preferably 0.01 to 3 parts by mass per 100 parts by mass of the water-soluble polymer (A), particularly preferably 0.05 to 2.5 parts by mass, even more preferably 0.1 to 2 parts by mass. If the proportion is too low, the peelability of the formed film from a cast surface of a film forming apparatus tends to be reduced, resulting in lower productivity. If too high, blocking tends to occur, or the adhesive strength tends to be reduced during sealing performed when the film is formed into a package.

The resin composition (Z) may further contain solvent, perfume, antirust agent, colorant, bulking agent, defoaming agent, UV absorber, liquid paraffins, fluorescent brightener, and bitter component (e.g., denatonium benzoate, etc.) to the extent that does not impair the object of the present disclosure. These can be used alone or in combination of two or more.

Examples of the solvent include ethanol, methanol, propanol, isopropanol, acetone, methyl ethyl ketone, acetic acid, methyl acetate, ethyl acetate, butyl acetate, benzene, and toluene. The solvents may be used alone or in combination of two or more.

In the present disclosure, an antioxidant may be blended. Examples of the antioxidant include sulfites such as sodium sulfite, potassium sulfite, calcium sulfite, and ammonium sulfite, tartaric acid, ascorbic acid, sodium thiosulfate, catechol, and rongalite. Among these, the sulfites are preferred, and sodium sulfite is particularly preferred. The amount of the antioxidant is preferably 0.1 to 10 parts by mass per 100 parts by mass of the water-soluble polymer (A), particularly preferably 0.2 to 5 parts by mass, even more preferably 0.3 to 3 parts by mass.

### <Method for Producing Water-Soluble Film>

The method for producing a water-soluble film according to the present disclosure will now be described.

It is preferable that the production method according to the present disclosure includes at least the following steps.
Step [I]: feeding a raw material containing the water-soluble polymer (A) as a main component to the multi-screw extruder.
Step [II]: feeding a raw material including water from at least one place in the multi-screw extruder.
Step [III]: mixing and dissolving each raw material in the multi-screw extruder to prepare the resin composition (Z).
Step [IV]: extruding the resin composition (Z) from a die to a cast surface to form a water-soluble film.

### [Step [I]: Feeding Water-Soluble Polymer (A) to Multi-Screw Extruder]

As a method of feeding a raw material containing the water-soluble polymer (A) as a main component, for example, the raw material is fed from a raw material feed port installed at the cylinder 2 of the multi-screw extruder 1 illustrated in FIG. 1. One or two or more raw material feed ports may be provided for feeding a raw material containing the water-soluble polymer (A) as a main component to the multi-screw extruder.

In the present disclosure, it is preferable that the raw material containing the water-soluble polymer (A) as a main component is fed from the raw material feed port 21 located most upstream, among a plurality of raw material feed ports installed, in terms of production efficiency. It is also preferable that a raw material containing a part of the water-soluble polymer (A) as a main component is fed from the raw material feed port 21 located most upstream, among a plurality of raw material feed ports installed, and the remaining water-soluble polymer (A), dissolved in water described later, is fed as a raw material including water described later.

The water-soluble polymer (A) to be fed may have any shape. Examples of the shape include powder, granular form, and pellets.

The raw material containing the water-soluble polymer (A) as a main component may contain the plasticizer (B), the filler (C), the surfactant (D), and other additives and solvent.

### [Step [II]: Feeding Raw Material Including Water from At Least One Place in Multi-Screw Extruder]

The step of feeding a raw material including water to the multi-screw extruder from at least one place in the multi-screw extruder 1 will now be described.

The raw material including water may contain, in addition to water, the water-soluble polymer (A), the plasticizer (B), the filler (C), the surfactant (D), and other additives and solvent.

In particular, the raw material including water preferably contains the plasticizer (B) and the filler (C).

The cylinder 2 having a raw material feed port preferably has a temperature of 15 to 105°C, more preferably 20 to 100°C, even more preferably 25 to 95°C. If the temperature of the cylinder is lower than 15°C, more energy is consumed to heat the mixture downstream, leading to lower productivity. If the temperature of the cylinder exceeds 105°C, vapor goes back to the upstream side and rises from the feed port for the water-soluble polymer (A), causing blocking of the water-soluble polymer (A). The productivity thus tends to be reduced.

When the plasticizer (B), the filler (C), the surfactant (D), and other additives and solvent are not blended in the raw material containing the water-soluble polymer (A) as a main component or the raw material including water, these raw materials may be fed individually from the raw material feed ports into the multi-screw extruder 1, for example, using the water feed pump 32, the feeder, the side feeder 33, or the like. In this case, these raw materials are preferably fed more downstream than the raw material including water is.

When the filler (C) is contained, the filler (C) may be blended with the raw material containing the water-soluble polymer (A) as a main component or the raw material including water as described above, but preferably the filler (C) dispersed in the plasticizer (B) is used in terms of dispersibility.

When the filler (C) is fed to the multi-screw extruder 1, the feeding takes place at a location preferably 50% or more from upstream of the screw, more preferably 60% or more, particularly preferably 70% or more, even more preferably 75% or more.

When the filler (C) is fed to the multi-screw extruder 1 at a location 50% or more from upstream of the screw, the filler (C) tends to be contained in such a size that can impart unevenness necessary for retaining antiblocking properties in the film.

In particular, this configuration is preferred when the organic filler (c1) is used as the filler (C), in order to obtain a film excellent in antiblocking properties and water sealability.

### [Step [III]: Mixing and Dissolving Each Raw Material in Multi-Screw Extruder to Prepare Resin Composition (Z)]

The step of mixing and dissolving each raw material in the multi-screw extruder 1 to prepare the resin composition (Z) is performed by rotating the screw 3 inside the cylinder 4 of the multi-screw extruder 1.

In this step, the water-soluble polymer (A) is dissolved in water to produce a mixture (film-forming material) as the resin composition (Z).

The rotational speed of the screw 3 is typically 50 to 1000 rpm, preferably 100 to 800 rpm, more preferably 150 to 600 rpm.

If the rotational speed of the screw 3 is too low, ejection tends to be unstable, and if too high, the resulting film may be colored.

The screws preferably rotate in the same direction in order to achieve sufficient kneading with appropriate shear.

Each cylinder 2 preferably has a temperature of 10 to 170°C, even more preferably 30 to 150°C, particularly preferably 40 to 130°C, especially preferably 50 to 110°C.

If the temperature is too low, the dissolution is insufficient, so that undissolved residues of the water-soluble polymer (A) tend to be produced or bubbles tend to remain. On the other hand, if the temperature is too high, the mixture is colored and the resulting film is reduced in transparency, or the antiblocking properties tend to be poor.

In the present disclosure, where the temperatures of the temperature-regulatable cylinders 2 are denoted as T₁, T₂, T₃, ..., Tₘ (where m is an integer equal to or more than 6) from upstream, it is preferable that the absolute value |Tₘ-Tₘ₋₁| of the temperature difference between the cylinders 2 adjacent to each other is equal to or less than 15.

If the absolute value |Tₘ-Tₘ₋₁| of the temperature difference between the cylinders 2 adjacent to each other exceeds 15, a steep change in viscosity of the resin composition (Z) occurs, so that the load of the multi-screw extruder rises above an acceptable level causing a stop of the screw 3, or the steep change of temperature causes water in the resin composition (Z) to form bubbles, and the resin composition (Z) is extruded with the bubbles being left, thereby tending to impair the appearance of the resulting water-soluble film.

In the present disclosure, the resin composition (Z) in the multi-screw extruder preferably has a water content of 20 to 60% by mass. The water content of the resin composition (Z) is more preferably 25 to 55% by mass, even more preferably 30 to 50% by mass.

If the water content is too low, the water-soluble polymer is not dissolved well causing undissolved residues, or the film-forming material has a higher viscosity and is not defoamed well, or die lines may occur during film formation. If the water content is too high, the accuracy of the film thickness is reduced, or the drying efficiency during film formation tends to be reduced thereby reducing the productivity of the water-soluble film.

In the present disclosure, the resin composition (Z) in the multi-screw extruder preferably has a pH of 4 to 10, more preferably 4.8 to 9.5.

### [Step [IV]: Extruding Resin Composition (Z) from Die to Cast Surface to Form Water-Soluble Film]

In step [IV], the resin composition (Z) prepared in step [III] is extruded from the die 30 to a cast surface and shaped into a film, which is subjected to a drying process, if necessary. The water-soluble film is thus formed.

Any type of conventionally known dies can be used as the die 30, but a T-slit die is preferred. The gear pump 28 is preferably connected between the multi-screw extruder and the die 30. It is preferable to use the gear pump 28 in order to make a thickness distribution uniform in the machine direction of the film.

The temperature of the resin composition (Z) at the ejection section of the T-slit die or the like is preferably 60 to 98°C, particularly preferably 70 to 95°C. If this temperature is too low, the viscosity of the film-forming material tends to increase thereby reducing the productivity of the water-soluble film, and if too high, bubbles tend to be produced.

In the present disclosure, the resin composition (Z) extruded from the die 30 preferably has a water content of 20 to 60% by mass. The water content of the resin composition (Z) is more preferably 25 to 55% by mass, even more preferably 30 to 50% by mass.

The water content of the resin composition (Z) collected immediately after being extruded from the die 30 is measured in conformity with JIS K 6726 3.4. The volatile content of the collected resin composition is defined as water content.

After the resin composition (Z) extruded from the die 30 is extruded to a cast surface such as a metal surface of an endless belt or a drum roll, or a plastic substrate surface such as a polyethylene terephthalate film, the resin composition (Z) is preferably dried on the cast surface.

Drying is typically performed by heating the cast surface. The cast surface preferably has a surface temperature of 50 to 150°C, particularly preferably 60 to 140°C. If the surface temperature is too low, the water content of the film tends to be high due to insufficient drying, and blocking tends to occur. If the surface temperature is too high, the resin composition (Z) tends to be foamed, resulting in poor film formation.

In the drying during film formation, for example, drying by a heat roll, drying using a floating dryer to blow hot air to the film, or drying using a far-infrared device or a dielectric heating device may be used in combination.

The formed water-soluble film is peeled from the cast surface or the like, transferred, and taken up onto a core to make a film roll. The resulting film roll can be supplied as it is as a product. Preferably, the water-soluble film slit into a film width of a desired size can be supplied as a film roll.

The water-soluble film may be subjected to texture processing on one side or both sides, for example, by imparting an emboss pattern, a minute uneven pattern, or a special engraved pattern, in terms of antiblocking properties, sliding properties during processing, reduction in adhesion between the products, and appearance.

### <Water-Soluble Film>

The water-soluble film according to the present disclosure is a film containing the water-soluble polymer (A) as a main component and soluble in water at normal temperature (20°C). Since the water-soluble film is obtained by the characteristic method in the present disclosure, the water-soluble film is free from undissolved residues of the water-soluble polymer (A) and has excellent appearance.

The thickness of the water-soluble film is selected as appropriate according to applications and the like, preferably 10 to 120 µm, particularly preferably 15 to 110 µm, even more preferably 20 to 100 µm. If the thickness is too small, the mechanical strength of the film tends to be reduced. If the thickness is too large, the speed of dissolution in water tends to be reduced and the film formation efficiency also tends to be reduced.

The width of the water-soluble film is selected as appropriate according to applications and the like, preferably 300 to 5000 mm, particularly preferably 500 to 4000 mm, even more preferably 600 to 3000 mm. If the width is too small, the production efficiency tends to be reduced. If too large, controlling slackness and film thickness tends to be difficult.

The length of the water-soluble film is selected as appropriate according to applications and the like, preferably 100 to 20000 m, particularly preferably 800 to 15000 m, even more preferably 1000 to 10000 m. If the length is too small, film switching tends to require time and effort thereby reducing the production efficiency. If the length is too large, tight winding tends to result in poor appearance.

The resulting water-soluble film preferably has a water content of 3 to 15% by mass in terms of mechanical strength and heat sealability, particularly preferably 5 to 9% by mass, even more preferably 6 to 8% by mass. If the water content is too low, the film tends to be too hard, leading to reduction in formability in making a package or reduction in impact resistance of the package. If too high, blocking tends to occur. The water content can be adjusted by setting drying conditions and moisture control conditions as appropriate.

The water content is measured in conformity with JIS K 6726 3.4, and the resulting volatile content is defined as water content.

The resulting water-soluble film preferably has a surface roughness (Ra) of 0.2 to 1.0 µm, particularly preferably 0.25 to 0.8 µm, even more preferably 0.3 to 0.6 µm.

If the surface roughness is too small, the antiblocking properties tend to be reduced, and if too large, the sealability tends to be reduced.

The water-soluble film preferably has a largest difference from peak-to-valley (Rz) of 2 to 10 µm, particularly preferably 3 to 8 µm, even more preferably 4 to 7 µm.

The surface roughness (Ra) or (Rz) can be measured using a laser microscope in conformity with JIS B0601-2001.

The water-soluble film according to the present disclosure may be a monolayer or a multilayer structure in which another film or a resin layer is laminated.

### <Package, Chemical Agent Package>

The package according to an embodiment of the present disclosure is formed from the resulting water-soluble film. The chemical agent package according to an embodiment of the present disclosure is a package in which the resulting water-soluble film contains a chemical agent. In the chemical agent package, since a chemical agent is packaged in the water-soluble film, the package as a whole can be put into water, and after the water-soluble film is dissolved in water, the chemical agent is dissolved or dispersed in water to fulfill the effect of the chemical agent. The chemical agent package is therefore suitable for a chemical agent package in which a relatively small amount such as a dose of chemical agent is packaged.

Examples of the chemical agent to be contained include agricultural chemicals such as pesticide, disinfectant, and herbicide, fertilizers, and detergents. Detergents such as laundry detergents and dishwashing detergents are particularly preferred. The chemical agent may be liquid or solid. The liquid chemical agent is in a liquid form. The solid chemical agent may be in a granular form, a tablet form, or a powdery form. The chemical agent is preferably dissolved or dispersed in water for use. In the present disclosure, in particular, the chemical agent package preferably contains a liquid detergent. The pH of the chemical agent may be alkaline, neutral, or acidic.

The liquid detergent preferably has a pH of 6 to 12 when dissolved or dispersed in water, particularly preferably 6.5 to 11, especially preferably 7 to 8. The liquid detergent preferably has a water content equal to or less than 15% by mass, particularly preferably 0.1 to 10% by mass, even more preferably 0.1 to 7% by mass. Within such ranges, the water-soluble film is free from gelation or insolubilization and has excellent water solubility.

The pH is measured in conformity with JIS K 3362 8.3. The water content is measured in conformity with JIS K 3362 7.21.3.

A known method can be employed to produce a chemical agent package by packaging a chemical agent such as liquid detergent using the water-soluble film according to the present disclosure.

For example, the chemical agent package is produced by bonding two water-soluble films together. One of the films (bottom film) is fixed onto a mold at a lower part of a forming apparatus and the other film (top film) is fixed at an upper part of the apparatus. Then, a chemical agent such as a liquid detergent is put into the formed film. Subsequently, the top film and the bottom film are press-bonded together. After press-bonding, the vacuum is removed, resulting in a package.

Exemplary methods for press-bonding the films after putting in the chemical agent include (1) heat sealing method; (2) water sealing method; and (3) adhesive sealing method, among which the water sealing method (2) is advantageous because of its versatility.

### EXAMPLES

The present disclosure will be described more specifically below using examples. However, it should be understood that the present disclosure is not limited to the following examples within the scope of the present disclosure.

In the examples, "parts" are based on mass.

The following ingredients were prepared for water-soluble films.
[Water-Soluble Polymer (A)]
   - PVA resin (a1): carboxy group-modified PVA resin with a 4% aqueous solution viscosity of 24 mPa·s as measured at 20°C, an average saponification degree of 94 mol%, and a monomethyl maleate modification degree of 2.0 mol %
[Water]
   - Ion-exchanged water
[Plasticizer (B)]
   - Plasticizer (b1): sorbitol
   - Plasticizer (b2): glycerin
[Filler (C)]
   - Filler (c1 -1): corn starch
[Surfactant (D)]
   - Surfactant (d1): phosphate surfactant

### <Example 1>

A head, a conduit, and a T die were installed at a downstream end of a twin-screw extruder having 8 cylinders (C₁, C₂, C₃, ..., C₈) capable of temperature regulation with respect to the screw effective length direction.

The screw configuration had a kneading disk region K₁ at a location 33 to 40% from upstream with respect to the screw effective length direction, a kneading disk region K₂ at a location 47 to 54% from upstream, a kneading disk region K₃ at a location 61 to 68% from upstream, and full-flight elements at other locations. The ratio (L/D) between the screw effective length (L) and the screw diameter (D) was 60, and the ratio (L_{KD}/L) of the total length (L_{KD}) of the kneading disk regions was 0.21.

A raw material feed port was installed at each of the cylinders C₁ and C₂. The cylinder C₁ was located at 1 to 13% from upstream with respect to the screw effective length direction, and the cylinder C₂ was located at 13 to 25%.

The PVA resin (a1) was fed using a feeder from the raw material feed port at the cylinder C₁.

An aqueous solution of 15% by mass of the plasticizer (b1) and 15% by mass of the plasticizer (b2) was prepared, and the aqueous solution was added from the raw material feed port at C₂ using a liquid feed pump.

The amount of feed and the amount of liquid fed by the pump were each adjusted so that PVA resin (a1)/plasticizer (b1)/plasticizer (b2)/water = 43% by mass/8.5% by mass/8.5% by mass/40% by mass.

The feeder section for the PVA resin (a1), the aqueous solution tank, and the pump section were set to normal temperature (23°C).

The setting temperature of the cylinders C₁ to C₈, the head, the conduit, and the T die was 90°C. With these settings, extrusion was performed to obtain a film-like resin composition from the die.

The resin composition extruded from the die had a water content of 40% by mass. Thereafter, the film-like resin composition extruded from the die was wound around a chill roll to obtain a water-soluble film with a thickness of 100 µm. The appearance of the resulting water-soluble film was visually checked, and the obtained film was transparent and no undissolved residues were observed. However, when exposed to light, the film had slight flicker.

### <Example 2>

A film-like resin composition was obtained from the die by performing extrusion in the same way as in Example 1, except that the screw configuration had a kneading disk region K₁ at a location 33 to 54% from upstream with respect to the screw effective length (L) direction and a kneading disk region K₂ at a location 61 to 68% from upstream (the ratio (L_{KD}/L) of the total length (L_{KD}) of the kneading disk regions was 0.28).

The resin composition extruded from the die had a water content of 38% by mass. Thereafter, the film-like product extruded from the die was wound around a chill roll to obtain a water-soluble film with a thickness of 100 µm. The appearance of the resulting water-soluble film was visually checked, and the obtained film was transparent and no undissolved residues were observed. When exposed to light, the film had no flicker.

### <Example 3>

A film-like resin composition was obtained from the die by performing extrusion in the same way as in Example 1, except that the screw configuration had a kneading disk region K₁ at a location 33 to 47% from upstream with respect to the screw effective length (L) direction and a kneading disk region K₂ at a location 61 to 68% from upstream (the ratio (L_{KD}/L) of the total length (L_{KD}) of the kneading disk regions was 0.21).

The resin composition extruded from the die had a water content of 40% by mass. Thereafter, the film-like resin composition extruded from the die was wound around a chill roll to obtain a water-soluble film with a thickness of 100 µm. The appearance of the resulting water-soluble film was visually checked, and the obtained film was transparent and no undissolved residues were observed. However, when exposed to light, the film had slight flicker.

### <Example 4>

A head, a conduit, and a T die were installed at a downstream end of a twin-screw extruder having 18 cylinders (C₁, C₂, C₃, ..., C₁₈) capable of temperature regulation with respect to the screw effective length direction.

The screw configuration had a kneading disk region K₁ at a location 23 to 35% from upstream with respect to the screw effective length direction, a kneading disk region K₂ at a location 36 to 48% from upstream, a kneading disk region K₃ at a location 49 to 60% from upstream, a kneading disk region K₄ at a location 62 to 70% from upstream, a kneading disk region K₅ at a location 71 to 79% from upstream, a kneading disk region K₆ at a location 80 to 87% from upstream, and full-flight elements at other locations. The ratio (L/D) between the screw effective length (L) and the screw diameter (D) was 63, and the ratio (L_{KD}/L) of the total length (L_{KD}) of the kneading disk regions was 0.58.

A raw material feed port was installed at each of the cylinders C₁, C₃, and C₄. The cylinder C₁ was located at 3 to 5% from upstream with respect to the screw effective length direction, the cylinder C₃ was located at 13 to 16%, and the cylinder C₄ was located at 19 to 22%.

A raw material composition including 100 parts by mass of the PVA resin (a1), 8 parts by mass of the filler (C1-1), and 1 part by mass of the surfactant (d1) was fed using a feeder from the raw material feed port at the cylinder C₁.

Further, water was fed from the raw material feed port at the cylinder C₃ using a liquid feed pump, and an aqueous solution of 41% by mass of the plasticizer (b1) and 41% by mass of the plasticizer (b2) was added from the raw material feed port at the cylinder C₄ using a liquid feed pump.

The amount of feed and the amount of liquid fed by the pump were each adjusted so that PVA resin (a1)/plasticizer (b1)/plasticizer (b2)/filler (c1-1)/surfactant (d1)/water = 40.5% by mass/8.1% by mass/8.1% by mass/3.3% by mass/0.4% by mass/39.6% by mass.

The feeder section for the PVA resin (a1), the aqueous solution tank, and the pump section were set to normal temperature (23°C).

The setting temperature of the cylinders C₁ to C₅ was 90°C, the setting temperature of the cylinders C₆ to C₁₆ was 110°C, and the setting temperature of the cylinders C₁₇ to C₁₈ was 70°C. The setting temperature of the head, the conduit, and the T die was 70°C. With these settings, extrusion was performed with a screw rotational speed of 200 rpm to obtain a film-like resin composition from the die.

The resin composition extruded from the die had a water content of 40% by mass. Thereafter, the film-like resin composition extruded from the die was wound around a chill roll to obtain a water-soluble film with a thickness of 100 µm. The appearance of the resulting water-soluble film was visually checked, and the obtained film was transparent and no undissolved residues were observed. When exposed to light, the film had no flicker.

### <Comparative Example 1>

A film-like resin composition was obtained from the die by performing extrusion in the same way as in Example 1, except that the screw configuration had a kneading disk region K₁ at a location 61 to 68% from upstream with respect to the screw effective length (L) direction (the ratio (L_{KD}/L) of the total length (L_{KD}) of the kneading disk regions was 0.07).

The resin composition extruded from the die had a water content of 40% by mass. Thereafter, the film-like resin composition extruded from the die was wound around a chill roll to obtain a water-soluble film with a thickness of 100 µm. The appearance of the resulting water-soluble film was visually checked, and a large amount of undissolved residues was observed, and the film had significantly poor appearance.

### <Comparative Example 2>

A film-like resin composition was obtained from the die by performing extrusion in the same way as in Example 1, except that the screw was entirely configured with full-flight elements

The film-like resin composition extruded from the die had a water content of 40% by mass. Thereafter, the film-like resin composition extruded from the die was wound around a chill roll to obtain a water-soluble film with a thickness of 100 µm. The appearance of the resulting water-soluble film was visually checked, and a large amount of undissolved residues was observed, and the film had significantly poor appearance.

The production conditions of the water-soluble films in Examples 1 to 4 and Comparative Examples 1 and 2, and the results of appearance evaluation of the resulting water-soluble films are shown in Table 1 below.

**Table 1**

| | Kneading disk region | | | Water-soluble film | |
|---|---|---|---|---|---|
| | Location (%) of upstream end of kneading disk region K₁ | Location (%) of downstream end of kneading disk region Kₘ | L_{KD}/L* | Appearance | |
| | | | | Undissolved residues | Flicker when exposed to light |
| Example 1 | 33 | 68 | 0.21 | None | Slightly observed |
| Example 2 | 33 | 68 | 0.28 | None | None |
| Example 3 | 33 | 68 | 0.21 | None | Slightly observed |
| Example 4 | 23 | 87 | 0.58 | None | None |
| Comparative Example 1 | 61 | 68 | 0.07 | Present | - |
| Comparative Example 2 | No kneading disk region | | - | Present | - |

| | | | | | |
|---|---|---|---|---|---|
| * Total length (L_{KD}) of kneading disk regions to screw effective length (L) | | | | | |

The water-soluble films produced in Examples 1 to 4 proved to be films free from undissolved residues of the PVA resin and having excellent appearance.

On the other hand, the water-soluble films produced in Comparative Examples 1 and 2 contained a large amount of undissolved residues of the PVA resin and had significantly poor appearance.

If the water-soluble films obtained in Comparative Examples 1 and 2 are each formed into a package, the film may be broken or suffer pinholes, causing leakage of the content from the package, and the water-soluble film is found to be impracticable.

While specific forms of the embodiments of the present disclosure have been shown in the above examples, the examples are merely illustrative and should not be interpreted in a limited sense. All modifications apparent to those skilled in the art are intended to be included in the scope of the present disclosure.

### INDUSTRIAL APPLICABILITY

The water-soluble film produced by the production method according to the present disclosure is usable for various packaging applications and particularly useful for unit packaging applications for chemical agents and food packaging applications.

## Claims

1. A method for producing a water-soluble film, the method comprising:
preparing a resin composition (Z) by mixing at least a water-soluble polymer (A) and water and dissolving the water-soluble polymer (A) in water using a multi-screw extruder; and
extruding the resin composition (Z) from a die to form a film,
wherein the multi-screw extruder comprises a plurality of temperature-regulatable cylinders,
wherein a plurality of screws each including a combination of a plurality of screw elements, and
wherein each of the screws has one or more kneading disk regions, where the one or more kneading disk regions are denoted as K₁, K₂, K₃, ..., Kₘ, where m is an integer equal to or more than 1, and Kₘ is a kneading disk region located most downstream, from upstream of the multi-screw extruder, K₁ has an upstream end located within 50% from upstream with respect to a screw effective length (L) direction, and a ratio (L_{KD}/L) of a total length (L_{KD}) of the kneading disk regions to the screw effective length (L) is equal to or more than 0.2.

2. The method for producing a water-soluble film according to claim 1, wherein the kneading disk region Kₘ has a downstream end located 50% or more from upstream with respect to the screw effective length (L) direction.

3. The method for producing a water-soluble film according to claim 1 or 2, wherein the water-soluble polymer (A) comprises a polyvinyl alcohol resin.

4. The method for producing a water-soluble film according to claim 1 or 2, wherein the resin composition (Z) extruded from the die has a water content of 20 to 60% by mass.

5. The method for producing a water-soluble film according to claim 1 or 2, wherein the resin composition (Z) comprises a plasticizer (B) in a proportion of 10 to 60 parts by mass per 100 parts by mass of the water-soluble polymer (A).

6. A water-soluble film produced by the method for producing a water-soluble film according to claim 1 or 2.

7. A package comprising the water-soluble film according to claim 6.

8. A chemical agent package comprising:
a package bag formed from the water-soluble film according to claim 6; and
a chemical agent packaged in the package bag.
